(19) Europäisches Patentamt
European Patent Office
Office européen des brevets

(11) **EP 4 787 829 A1**

(12) **EUROPEAN PATENT APPLICATION**
published in accordance with Art. 153(4) EPC

(43) Date of publication:
**05.08.2026 Bulletin 2026/32**

(21) Application number: **24872099.7**

(22) Date of filing: **20.09.2024**

(51) International Patent Classification (IPC):
**H04N 1/387** (2006.01)       **H04N 1/00** (2006.01)

(52) Cooperative Patent Classification (CPC):
**H04N 1/00; H04N 1/387**

(86) International application number:
**PCT/JP2024/033694**

(87) International publication number:
**WO 2025/070308 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023   JP 2023163706
26.09.2023   JP 2023163708
26.09.2023   JP 2023163711**

(71) Applicant: **KYOCERA Document Solutions Inc.
Osaka-shi, Osaka 540-8585 (JP)**

(72) Inventors:
• **MORIMOTO, Kanako
Osaka-shi, Osaka 540-8585 (JP)**
• **TAKI, Kosuke
Osaka-shi, Osaka 540-8585 (JP)**
• **DU, Zhouning
Osaka-shi, Osaka 540-8585 (JP)**

(74) Representative: **Heuer, Wilhelm
Beetz & Partner mbB
Patentanwälte
Prinzregentenstraße 54
80538 München (DE)**

(54) **IMAGE PROCESSING DEVICE**

(57)      An image processing device (100) includes an image reading unit (2), a control unit (10) and an operation display unit (3), the operation display unit (3) receives an item specification operation and the control unit (10) recognizes an item specified in the item specification operation as a target item, and masks at least the region of an item value in the region of the target item present in image data to generate masked data.

FIG.14

## Description

Technical Field

The present invention relates to image processing devices.

Background Art

Conventionally, an image processing device is known which reads an identification card as a document, and masks a region of personal information in image data obtained by the reading. The image processing device as described above is disclosed, for example, in Patent Literature 1.

Citation List

Patent Literature

Patent Literature 1: Japanese Unexamined Patent Application Publication No. 2021-197682

Summary of Invention

Technical Problem

For example, personal information included in an identification card is classified into a plurality of items. Examples of the item include a name, an address and the like. In such an identification card, only a region corresponding to a specified item in image data obtained by reading may be desired to be masked. The region desired to be masked varies from user to user.

Here, if only a specific type of identification card is targeted, a region to be masked (in other words, a position in the image data of the identification card) may be preset. In this way, when an identification card which has been read is the specific type of identification card, only a region corresponding to a specified item in the image data of the identification card is masked.

However, when an identification card of a type different from the specific type is read and masked, it is necessary to set a region to be masked each time. Hence, it is burdensome and inconvenient for a user to do so.

The present invention is made to solve the problem described above, and an object of the present invention is to provide an image processing device which can easily mask only a region corresponding to an item specified by a user in image data obtained by reading a document.

Solution to Problem

In order to achieve the object described above, an image processing device according to a first aspect of the present invention includes: an image reading unit that reads a document including a plurality of items each having a set of an item name and an item value, the plurality of items being related to personal information; a control unit that recognizes a target item that is an item to be masked, and performs masking processing on image data obtained by reading the document with the image reading unit to generate masked data in which at least a part of a region of the target item present in the image data is masked; and an operation display unit that displays information and receives an operation. The operation display unit receives an item specification operation that specifies one of the plurality of items. The control unit recognizes, as the target item, the item specified in the item specification operation, and performs, as the masking processing, processing that masks at least a region of an item value in the region of the target item present in the image data to generate the masked data.

An image processing device according to a second aspect of the present invention includes: an image reading unit that reads a document including a plurality of items each having a set of an item name and an item value, the plurality of items being related to personal information; and a control unit that recognizes a target item that is an item to be masked, and performs masking processing on image data obtained by reading the document with the image reading unit to generate masked data in which at least a part of a region of the target item present in the image data is masked. The control unit performs first region detection processing that detects, from the image data, a first region predicted to individually include either a region of the item name or a region of the item value, second region detection processing that detects, from the image data, a second region predicted to include both a region of the item name and a region of the item value corresponding to the same item, inclusion region detection processing that is performed on each of a plurality of first regions each being the first region, and detects the second region including an image part in which an image similarity degree to the first region to be processed is equal to or greater than a threshold value to detect the second region including the first region to be processed and region association processing that associates the plurality of first regions included in the same second region with each other.

An image processing device according to a third aspect of the present invention includes: an image reading unit that reads a document including a plurality of items each having a set of an item name and an item value, the plurality of items being related to personal information; a control unit that recognizes a target item that is an item to be masked, and performs masking processing on image data obtained by reading the document with the image reading unit to generate masked data in which at least a part of a region of the target item present in the image data is masked; and a storage unit. The storage unit stores, for each of a plurality of types of the plurality of items, dictionary data in which a plurality of different similar item names are predefined for one type of the item. The control unit performs first region detection processing that detects, from the image data, a first region predicted to individually include either a region of the item name or a region of the item value, character recognition processing that recognizes a character string in the first region and item name region determination processing that is performed on each of a plurality of first regions each being the first region, determines a character string similarity degree between a character string in the first region to be processed and each of character strings of all the similar item names and determines that the first region to be processed is the region of the item name when a maximum value of the character string similarity degrees determined is equal to or greater than a threshold value.

Advantageous Effects of Invention

In the configuration of the present invention, it is possible to easily mask only a region corresponding to an item specified by a user in image data obtained by reading a document.

Brief Description of Drawings

FIG. 1 is a schematic view of a multifunctional peripheral in an embodiment:

FIG. 2 is a block diagram of the multifunctional peripheral in the embodiment;

FIG. 3 is a diagram schematically showing an example of an identification card which is to be read with the multifunctional peripheral in the embodiment;

FIG. 4 is a flowchart showing the flow of a masking job which is performed in the multifunctional peripheral in the embodiment;

FIG. 5 is a diagram showing first regions in image data obtained by reading the identification card with the multifunctional peripheral in the embodiment;

FIG. 6 is a diagram showing second regions in the image data obtained by reading the identification card with the multifunctional peripheral in the embodiment;

FIG. 7 is a diagram showing masked data which is generated in the masking job performed in the multifunctional peripheral in the embodiment;

FIG. 8 is a conceptual view of dictionary data which is used in the masking job performed in the multifunctional peripheral in the embodiment;

FIG. 9 is a flowchart showing the flow of region determination processing which is performed in the multifunctional peripheral in the embodiment;

FIG. 10 is a flowchart showing the flow of first abnormality countermeasure processing which is performed in the multifunctional peripheral in the embodiment;

FIG. 11 is a flowchart showing the flow of second abnormality countermeasure processing and third abnormality countermeasure processing which are performed in the multifunctional peripheral in the embodiment;

FIG. 12 is a flowchart showing the flow of the second abnormality countermeasure processing performed in the multifunctional peripheral in the embodiment;

FIG. 13 is a flowchart showing the flow of the third abnormality countermeasure processing performed in the multifunctional peripheral in the embodiment;

FIG. 14 is a flowchart showing the flow of processing which is performed when the setting of the masking job performed in the multifunctional peripheral in the embodiment is received;

FIG. 15 is a diagram showing a reception screen which is displayed in the multifunctional peripheral in the embodiment; and

FIG. 16 is a diagram showing a registration screen which is displayed in the multifunctional peripheral in the embodiment.

Description of Embodiments

<Configuration of multifunctional peripheral>

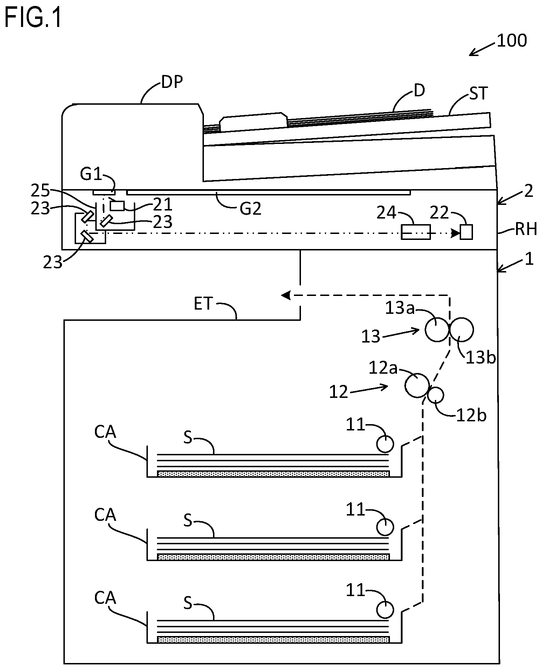

An image processing device according to an embodiment of the present invention will be described below with reference to FIGS. 1 to 16 using, as an example, a multifunctional peripheral 100 which has a plurality of functions such as a scanning function, a printing function and a transmission function.

As shown in FIG. 1, the multifunctional peripheral 100 (which corresponds to the "image processing device") includes a printing unit 1. The printing unit 1 forms the main body of the multifunctional peripheral 100. The printing unit 1 prints an image on a sheet S. The printing method of the printing unit 1 is an electrophotographic method. However, the printing method is not limited to this electrophotographic method. The printing method of the printing unit 1 may be an inkjet method.

The printing unit 1 forms the image based on image data which is input to the multifunctional peripheral 100. The printing unit 1 conveys the sheet S along a sheet conveyance path. The printing unit 1 prints the image on the sheet S being conveyed. In FIG. 1, the sheet conveyance path is indicated by dashed lines.

The printing unit 1 includes paper feed rollers 11. The paper feed roller 11 is brought into contact with the sheet S stored in a sheet cassette CA, and is rotated in this state. In this way, the paper feed roller 11 feeds the sheet S from the sheet cassette CA to the sheet conveyance path.

The printing unit 1 includes an image formation unit 12. The image formation unit 12 includes a photosensitive drum 12a and a transfer roller 12b. The photosensitive drum 12a carries a toner image on its circumferential surface. The transfer roller 12b is pressed against the photosensitive drum 12a to form a transfer nip between the photosensitive drum 12a and the transfer roller 12b. The transfer roller 12b is rotated together with the photosensitive drum 12a. The image formation unit 12 transfers the toner image to the sheet S while conveying the sheet S which has entered the transfer nip.

The image formation unit 12 further includes a charging device, an exposure device and a development device which are not shown in the figure. The charging device charges the circumferential surface of the photosensitive drum 12a. The exposure device forms an electrostatic latent image on the circumferential surface of the photosensitive drum 12a. The development device develops the electrostatic latent image on the circumferential surface of the photosensitive drum 12a into the toner image.

The printing unit 1 includes a fixing unit 13. The fixing unit 13 includes a heating roller 13a and a pressure roller 13b. The heating roller 13a incorporates a heater (not shown). The pressure roller 13b is pressed against the heating roller 13a to form a fixing nip between the heating roller 13a and the pressure roller 13b. The pressure roller 13b is rotated together with the heating roller 13a. The fixing unit 13 fixes the toner image transferred to the sheet S on the sheet S while conveying the sheet S which has entered the fixing nip. The sheet S which has passed through the fixing nip is ejected to an ejection tray ET.

The multifunctional peripheral 100 includes an image reading unit 2. The image reading unit 2 is disposed in an upper portion of the main body of the multifunctional peripheral 100. In a job for reading a document D, the document D is set on the image reading unit 2. The image reading unit 2 reads the document D set on the image reading unit 2 to generate the image data of the document D which has been read.

The image reading unit 2 includes contact glass G1 and contact glass G2. The contact glass G1 and the contact glass G2 are installed in the housing RH of the image reading unit 2. The housing RH includes an opening in an upper surface. The contact glass G1 and the contact glass G2 are attached to the opening in the upper surface of the housing RH.

The image reading unit 2 includes a document conveyance device DP. The document conveyance device DP is attached to the housing RH. When viewed from the front of the multifunctional peripheral 100, the document conveyance device DP is turned such that a front part is swung in an up/down direction with a back part used as a support point. The document conveyance device DP is opened and closed relative to the upper surface of the housing RH.

The document conveyance device DP includes a set tray ST on which the document D is set. The document conveyance device DP conveys the document D set on the set tray ST onto the contact glass G1.

In a conveyance reading mode, the document D is set on the set tray ST by a user. Then, the document D which is automatically conveyed by the document conveyance device DP onto the contact glass G1 (that is, the document D which is being passed through the top of the contact glass G1) is read. On the other hand, in a placement reading mode, the document D is set by the user onto the contact glass G2, and the document D on the contact glass G2 is read.

The image reading unit 2 includes a light source 21, an image sensor 22, mirrors 23 and a lens 24. The light source 21, the image sensor 22, the mirrors 23 and the lens 24 are installed in the housing RH. The image reading unit 2 performs a scanning operation in which light is emitted from the light source 21 toward the contact glass G1 or the contact glass G2, and is photoelectrically converted by the image sensor 22.

The light source 21 includes a plurality of LED elements. The LED elements are arranged in a line in a main scanning direction (direction perpendicular to the plane of FIG. 1). The image sensor 22 includes a plurality of photoelectric conversion elements arranged in the main scanning direction. The mirrors 23 reflect the light toward the lens 24. The lens 24 collects the light reflected by the mirrors 23, and guides the light to the image sensor 22.

The light source 21 and the mirrors 23 are installed in a carriage 25 which can be moved in a sub-scanning direction (left/right direction in FIG. 1) orthogonal to the main scanning direction. The carriage 25 is moved in the sub-scanning direction, and thus a reading line made by the image reading unit 2 is moved in the sub-scanning direction.

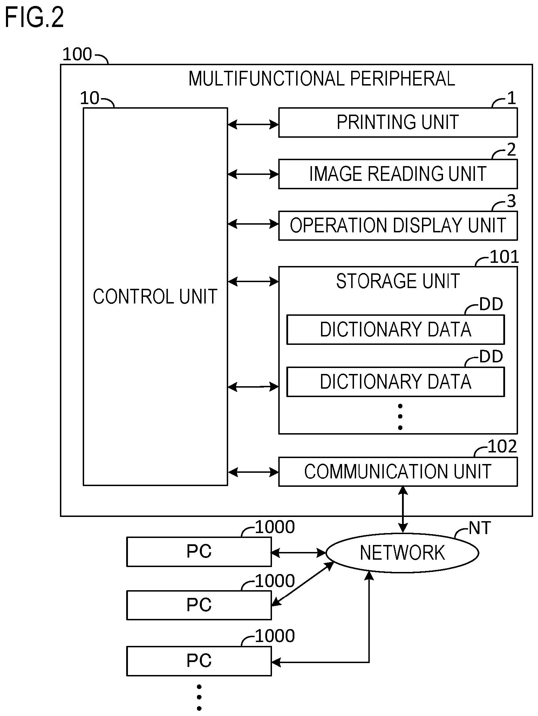

As shown in FIG. 2, the multifunctional peripheral 100 includes an operation display unit 3. The operation display unit 3 is an operation panel which includes a touch screen. The operation display unit 3 displays software buttons, a message and the like on the touch screen. In the operation display unit 3, a plurality of hardware buttons are also provided. The operation display unit 3 receives an operation from the user. The user can set various jobs such as a masking job which will be described later to the multifunctional peripheral 100 via the operation display unit 3.

The multifunctional peripheral 100 includes a control unit 10. The control unit 10 includes a CPU, an ASIC, a memory and the like. The control unit 10 includes an image processing circuit. The control unit 10 performs various types of image processing on the image data. The control unit 10 controls printing of the image on the sheet S performed by the printing unit 1, and reading of the document D performed by the image reading unit 2.

The control unit 10 also controls the operation display unit 3. Specifically, the control unit 10 controls the display operation of the touch screen. The control unit 10 detects operations on the software buttons and the hardware buttons. The control unit 10 sets a job based on an operation received by the operation display unit 3 from the user.

The multifunctional peripheral 100 includes a storage unit 101. The storage unit 101 is a nonvolatile storage device. As the storage unit 101, an HDD, an SSD and the like may be used. The storage unit 101 is connected to the control unit 10. The control unit 10 writes information to the storage unit 101, and reads information from the storage unit 101.

The storage unit 101 previously stores predetermined information. For example, the storage unit 101 previously stores a character recognition program. The control unit 10 performs character recognition processing such as OCR (Optical Character Recognition) processing based on the character recognition program. The control unit 10 performs the character recognition processing on the image data obtained by reading the document D with the image reading unit 2.

The multifunctional peripheral 100 includes a communication unit 102. The communication unit 102 is an interface for communicatively connecting an external device to the multifunctional peripheral 100. The communication unit 102 includes a communication circuit, a communication memory, a communication connector and the like. The communication unit 102 is connected to the control unit 10. The control unit 10 uses the communication unit 102 to exchange data between the external device and the control unit 10.

The communication unit 102 is communicatively connected to the external device via a network NT such as a LAN or the Internet. The communication unit 102 may be directly connected to the external device via an unillustrated communication cable. The external device connected to the communication unit 102 is, for example, a personal computer 1000 (hereinafter referred to as the "PC 1000") which is used by the user of the multifunctional peripheral 100. An external device other than the PC 1000 may be communicatively connected to the multifunctional peripheral 100. The PC 1000 is connected to the multifunctional peripheral 100, and thus it is possible to transmit, to the PC 1000, the image data of the document D obtained by reading the document D with the image reading unit 2. In this way, the image data of the document D can be stored in the PC 1000.

<Outline of masking job>

When entering into a contract for a product, a service or the like, a person wishing to enter into the contract may be required to register personal information. This is one example, and there are various other cases where registration of personal information is required. Examples of personal information include a name, an address, the date of birth and the like.

The user of the multifunctional peripheral 100 performs a personal information registration operation. When registering personal information, the user uses the scanning function of the multifunctional peripheral 100 to read an identification card. The types of identification cards to be registered vary depending on the country, the field and the like. Examples of the identification card include a driver's license, a health insurance card, a student ID card, a passport and the like.

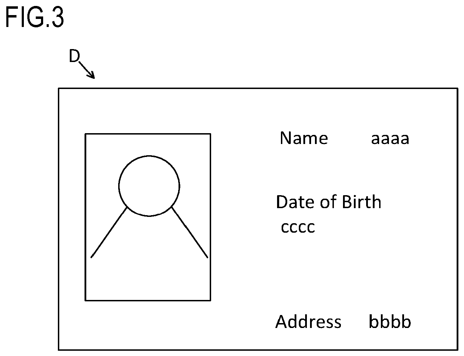

An example of the identification card is schematically shown in FIG. 3. In the identification card, personal information is classified into a plurality of items, and the items are listed. In other words, the identification card includes a plurality of sets of item names and item values of the items related to the personal information. In the example shown in FIG. 3, a character string of "Name" corresponds to an item name, and a character string of "aaaa" corresponds to the item value of an item corresponding to the item name "Name". A character string of "Address" corresponds to an item name, and a character string of "bbbb" corresponds to the item value of an item corresponding to the item name "Address". A character string of "Date of Birth" corresponds to an item name, and a character string of "cccc" corresponds to the item value of an item corresponding to the item name "Date of Birth".

When the identification card shown in FIG. 3 is read, in image data obtained by reading the identification card, a character region which includes the character string of "Name" indicating the item name and a character region which includes the character string of "aaaa" indicating the item value appear. A character region which includes the character string of "Address" indicating the item name and a character region which includes the character string of "bbbb" indicating the item value appear. A character region which includes the character string of "Date of Birth" indicating the item name and a character region which includes the character string of "cccc" indicating the item value appear.

In the following description, when it is necessary to distinguish between a plurality of character regions, the character region of the item name "Name" is identified with a symbol C11, and the character region of the item value "aaaa" is identified with a symbol C12. The character region of the item name "Address" is identified with a symbol C21, and the character region of the item value "bbbb" is identified with a symbol C22. The character region of the item name "Date of birth" is identified with a symbol C31, and the character region of the item value "cccc" is identified with a symbol C32.

After reading the identification card with the multifunctional peripheral 100, an image (that is, the personal information included in the identification card) based on the image data of the identification card obtained by the reading is printed on the sheet S. Then, the sheet S on which the personal information is printed is stored. In this way, the registration of the personal information is performed. The image data (that is, electronic data) of the identification card itself may be stored.

Here, in some cases, it is necessary to mask a part of personal information. For example, it is assumed that a field for the date of birth is provided in an identification card whereas the date of birth is not needed in a contract for a product, a service or the like. In this example, the personal information related to the date of birth may need to be masked. For example, although in some countries, an identification card has a field for religion, the recording of personal information related to religion is not allowed depending on the country. In this example, the personal information related to religion may need to be masked.

For example, it has been conventionally a common practice to manually black out personal information to be masked to conceal the personal information. However, depending on the user, it is burdensome to manually mask a part of the personal information.

Hence, in the multifunctional peripheral 100, a masking function is incorporated. In other words, the multifunctional peripheral 100 can perform a job related to the masking function (hereinafter simply referred to as the "masking job").

The masking function is utilized, and thus it is possible to acquire masked data which is the image data in which a part of the personal information in the identification card is masked. An image based on the masked data can be printed on the sheet S, and the masked data can be transmitted to the PC 1000 and stored in the PC 1000.

When the masking job is performed, the masking job is set. In the setting of the masking job, personal information to be masked can be arbitrarily specified. The setting of the masking job will be described in detail later.

After the setting of the masking job, the user sets the identification card serving as the document D on the image reading unit 2. In such a state, the user performs the start operation of the masking job on the operation display unit 3. When detecting that the start operation has been performed on the operation display unit 3, the control unit 10 starts the masking job.

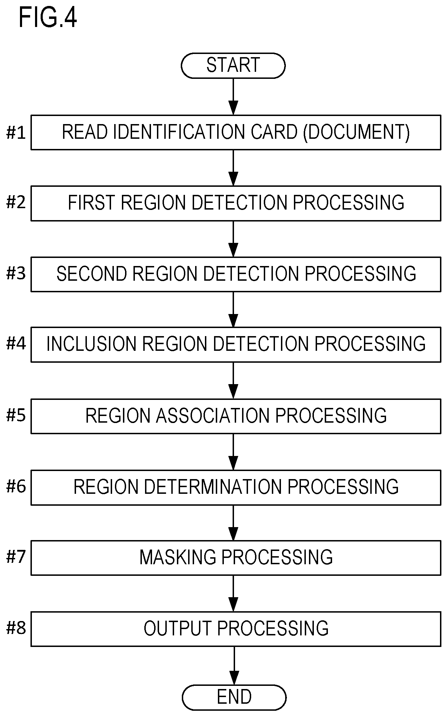

The flow of the masking job will be described below with reference to a flowchart shown in FIG. 4. The flow shown in FIG. 4 is started when the start operation of the masking job on the operation display unit 3 is detected by the control unit 10.

Before the start operation of the masking job is performed, the user sets the masking job. In the setting of the masking job, a target item which is an item corresponding to an item value to be masked is specified. When performing the masking job, the control unit 10 recognizes the target item specified by the user.

In step #1, the control unit 10 causes the image reading unit 2 to read the identification card serving as the document D. The image reading unit 2 reads the identification card to generate the image data of the read identification card (that is, the scanned data of the identification card). The control unit 10 acquires the image data of the identification card obtained by reading the identification card with the image reading unit 2.

In step #2, the control unit 10 uses a first learning model obtained by machine learning to perform first region detection processing. The control unit 10 performs, as the first region detection processing, processing which detects, from the image data of the identification card, a first region predicted to individually include either the region of the item name or the region of the item value.

The first learning model for the first region detection processing is a learning model which has been trained to detect the first region from the image data obtained by reading the identification card with the image reading unit 2. The first learning model is a trained model, and is previously stored in the storage unit 101.

The identification card generally includes a plurality of pairs of item names and item values. Hence, in the first region detection processing, a plurality of first regions are detected. Therefore, when the first region is not detected as a result of the first region detection processing or when only one first region is detected, the masking job may be stopped, and a message may be displayed on the operation display unit 3 to prompt the user to check the document D set on the image reading unit 2.

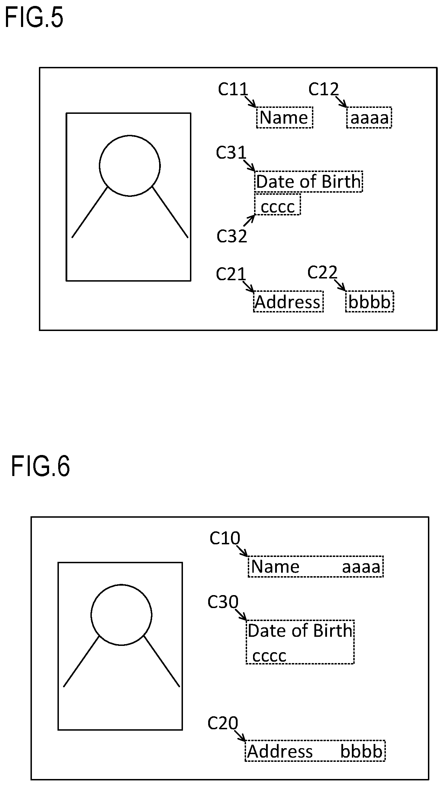

In the identification card shown in FIG. 3, each of the character region C11 of the item name "Name", the character region C12 of the item value "aaaa", the character region C21 of the item name "Address", the character region C22 of the item value "bbbb", the character region C31 of the item name "Date of Birth" and the character region C32 of the item value "cccc" is individually detected as the first region. The first regions are clearly shown in FIG. 5.

In step #3, the control unit 10 uses a second learning model obtained by machine learning to perform second region detection processing. The control unit 10 performs, as the second region detection processing, processing which detects a second region predicted to include both the region of the item name and the region of the item value corresponding to the same item.

The second learning model for the second region detection processing is a learning model which has been trained to detect the second region from the image data obtained by reading the identification card with the image reading unit 2. The second learning model is a trained model, and is previously stored in the storage unit 101.

When the identification card has been read, as a result of the second region detection processing, at least one second region is detected. When no second region is detected in the second region detection processing, a document other than the identification card may have been read. Therefore, when no second region is detected in the second region detection processing, the masking job may be stopped, and a message may be displayed on the operation display unit 3 to prompt the user to check the document D set on the image reading unit 2.

In an example shown in FIG. 5, regions C10, C20 and C30 shown in FIG. 6 are detected as the second regions. Specifically, the single region C10 which includes the character region C11 of the item name "Name" and the character region C12 of the item value "aaaa" is detected as the second region. The single region C20 which includes the character region C21 of the item name "Address" and the character region C22 of the item value "bbbb" is detected as the second region. The single region C30 which includes the character region C31 of the item name "Date of Birth" and the character region C32 of the item value "cccc" is detected as the second region.

In step #4, the control unit 10 performs inclusion region detection processing on each of the first regions detected in the first region detection processing. Each of the first regions is subjected to the inclusion region detection processing once. The control unit 10 performs the inclusion region detection processing on one of the first regions as the first region to be processed, and when the inclusion region detection processing described above is completed, the control unit 10 performs the inclusion region detection processing on one of the first regions which have not been subjected to the processing yet as another first region to be processed.

The control unit 10 performs, as the inclusion region detection processing, processing which detects the second region including the first region to be processed. The control unit 10 detects the second region including an image part in which an image similarity degree to the first region to be processed is equal to or greater than a threshold value for the inclusion region detection processing to detect the second region including the first region to be processed. The control unit 10 determines that the first region to be processed is included in the second region including the image part in which the image similarity degree to the first region to be processed is equal to or greater than the threshold value for the inclusion region detection processing. The character recognition processing has not been performed so far. In other words, the image similarity degree is a similarity degree between parts of the image data, and is not a similarity degree between character strings (that is, parts of text data). The control unit 10 uses, for example, a known pattern matching technique to perform the inclusion region detection processing. Although the threshold value for the inclusion region detection processing is not particularly limited, the threshold value is equal to or greater than 70%.

In the example shown in FIGS. 5 and 6, the second region C10 includes an image part in which an image similarity degree to the first region C11 (the region of the item name "Name") is equal to or greater than the threshold value, and an image part in which an image similarity degree to the first region C12 (the region of the item value "aaaa") is equal to or greater than the threshold value. The second region C20 includes an image part in which an image similarity degree to the first region C21 (the region of the item name "Address") is equal to or greater than the threshold value, and an image part in which an image similarity degree to the first region C22 (the region of the item value "bbbb") is equal to or greater than the threshold value. The second region C30 includes an image part in which an image similarity degree to the first region C31 (the region of the item name "Date of Birth") is equal to or greater than the threshold value, and an image part in which an image similarity degree to the first region C32 (the region of the item value "cccc") is equal to or greater than the threshold value. In this way, the first regions C11 and C12 are determined to be included in the second region C10, the first regions C21 and C22 are determined to be included in the second region C20 and the first regions C31 and C32 are determined to be included in the second region C30.

In step #5, the control unit 10 performs region association processing. Specifically, the control unit 10 associates the first regions included in the same second region with each other.

In the example shown in FIGS. 5 and 6, the first regions C11 and C12 included in the second region C10 are associated with each other. The first regions C21 and C22 included in the second region C20 are associated with each other. The first regions C31 and C32 included in the second region C30 are associated with each other.

In step #6, the control unit 10 performs region determination processing. The control unit 10 performs the region determination processing to recognize which of the first regions associated with each other is the region of the item name and which of the first regions associated with each other is the region of the item value. In other words, the control unit 10 performs the region determination processing to distinguish between the region of the item name and the region of the item value.

In the example shown in FIGS. 5 and 6, in the second region C10, the first region C11 is determined to be the region of the item name, and the first region C12 is determined to be the region of the item value. In the second region C20, the first region C21 is determined to be the region of the item name, and the first region C22 is determined to be the region of the item value. In the second region C30, the first region C31 is determined to be the region of the item name, and the first region C32 is determined to be the region of the item value.

The control unit 10 performs the region determination processing to recognize the region of the target item. The region of the target item is the second region which includes both the first region corresponding to the item name of the target item and the first region corresponding to the item value of the target item. The region determination processing will be described in detail later. Another method may be used to recognize the region of the target item.

In step #7, the control unit 10 performs masking processing which masks at least a part of the region of the target item present in the image data of the identification card. The control unit 10 performs the masking processing to generate masked data in which at least a part of the region of the target item present in the image data of the identification card is masked.

The control unit 10 masks the first region associated with the region of the item name of the target item (that is, the region of the item value of the target item). Alternatively, the control unit 10 masks both the regions of the item name and the item value of the target item. The control unit 10 may mask substantially the entire second region corresponding to the target item.

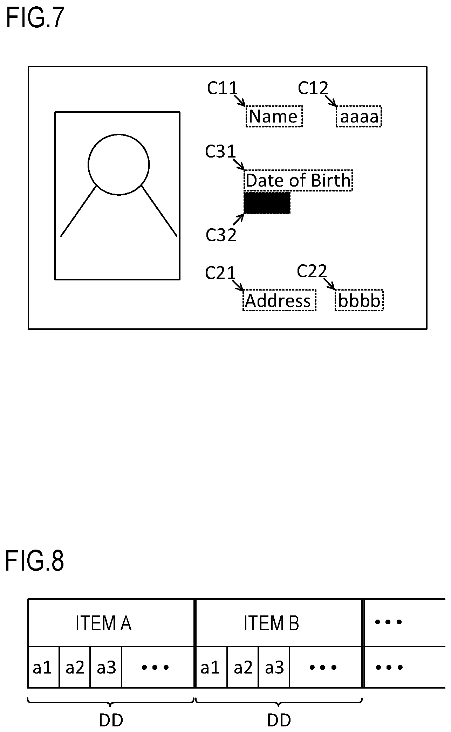

An example of the masked data is shown in FIG. 7. The masked data shown in FIG. 7 is generated when the target item is the date of birth. In other words, at least the item value "cccc" corresponding to the item name "Date of Birth" is masked. Although not shown in the figure, both the item name "Date of Birth" and the item value "cccc" may be masked.

In step #8, the control unit 10 causes an output unit to perform output processing on the masked data. For example, in the setting of the masking job, a method for outputting the masked data can be selected. As the output method, printing and transmission are provided.

When the printing is selected as the output method, the control unit 10 causes the printing unit 1 to print (that is, output) an image based on the masked data on the sheet S. In this case, the printing unit 1 corresponds to the "output unit", and the output destination is the sheet S.

When the transmission is selected as the output method, the control unit 10 causes the communication unit 102 to transmit (that is, output) the masked data to the PC 1000. The masked data may be converted into PDF data, and transmitted to the PC 1000. The masked data is transmitted to the PC 1000, and thus the masked data can be stored in the PC 1000. In this case, the communication unit 102 corresponds to the "output unit", and the output destination is the PC 1000.

In the present embodiment, the first region detection processing, the second region detection processing, the inclusion region detection processing and the region association processing are performed. In this way, it is possible to accurately associate the regions of the item name and the item value corresponding to the same item in the image data of the identification card with each other.

The regions of the item name and the item value corresponding to the same item in the image data of the identification card are associated with each other, and thus it is possible to easily mask at least a part of the target item. Specifically, the region associated with the region of the item name of the target item may be masked. In this way, it is possible to bring the item value of the target item into a masked state. In this configuration, it is possible to easily mask only the region corresponding to the item specified by the user in the image data obtained by reading the document D (identification card) without transferring the image data of the identification card to a processing device in the cloud.

The region of the item value in the image data of the identification card can be masked, and thus it is possible to suppress the leakage of the personal information. Even when the region of the item name of the target item is masked, if the region of the item value of the target item is not masked, the personal information is leaked. Hence, it is important to accurately associate the regions of the item name and the item value corresponding to the same item in the image data of the identification card with each other.

In the present embodiment, the first learning model is used to perform the first region detection processing, and the second learning model is used to perform the second region detection processing. Here, a huge amount of computation and a huge amount of memory capacity are required for machine learning. Hence, processing related to machine learning is often performed by a processing device in the cloud. However, this method is not preferable because it is necessary to transfer the image data of the identification card to the processing device in the cloud, and thus the personal information may be leaked.

Therefore, in the present embodiment, the trained first learning model is used, and the trained second learning model is used. The first learning model and the second learning model each are previously stored in the storage unit 101. In this way, it is possible to perform the first region detection processing and the second region detection processing in the multifunctional peripheral 100 without increasing a memory capacity in the multifunctional peripheral 100. In other words, it is not necessary to transfer the image data of the identification card to the processing device in the cloud. Consequently, it is possible to suppress the leakage of the personal information.

<Region determination processing>

The control unit 10 performs the region determination processing which determines whether each of a plurality of first regions (that is, character regions including character strings) present in the image data of the identification card is the region of the item name or the region of the item value. In the region determination processing, dictionary data DD is used. The dictionary data DD is previously stored in the storage unit 101 (see FIG. 2).

A conceptual view of the dictionary data DD is shown in FIG. 8. The dictionary data DD is data in which a plurality of different similar item names are predefined for one type of item. The dictionary data DD is previously produced for each of a plurality of types of items. The storage unit 101 previously stores a plurality of pieces of dictionary data DD which correspond to the plurality of types of items, respectively. The plurality of pieces of dictionary data DD are previously produced by the manufacturer of the multifunctional peripheral 100, and are previously stored in the storage unit 101. In FIG. 8, items are indicated by A, B, .... Similar item names corresponding to the item A are indicated by a1, a2, a3, .... Similar item names corresponding to the item B are indicated by b1, b2, b3, ....

When an identification number is used as an example of the item, one identification card may use a character string "ID" as the item name, another identification card may use a character string "Number" as the item name and yet another identification card may use a character string "Num" as the item name. The character strings described here are different from each other but all the character strings correspond to the same item. Hence, in the dictionary data DD which corresponds to the item of the identification number, the character string "ID", the character string "Number", the character string "Num" and the like are predefined as the similar item names.

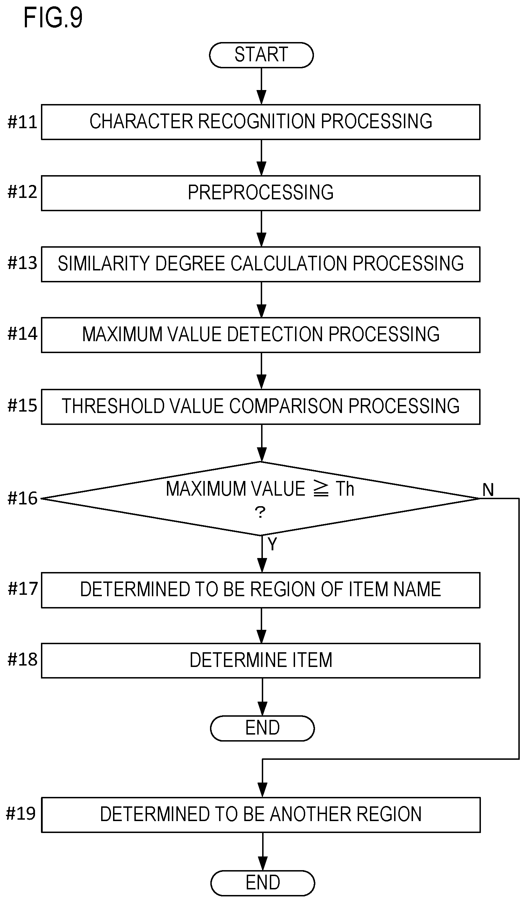

The flow of the region determination processing will be described below with reference to a flowchart shown in FIG. 9. The flow shown in FIG. 9 is started when the region association processing performed by the control unit 10 is completed.

In step #11, the control unit 10 performs the character recognition processing on the image data of the identification card obtained by reading the identification card with the image reading unit 2 (that is, the processing in step #1 shown in FIG. 4). The control unit 10 performs OCR processing on the image data of the identification card. In this way, the control unit 10 extracts a character string from each of a plurality of first regions present in the image data of the identification card. The control unit 10 recognizes the character string in each of the plurality of first regions. In the first region, the character string indicating the item name or the character string indicating the item value is present.

In step #12, the control unit 10 performs preprocessing on a plurality of character strings extracted in the character recognition processing. The preprocessing is not particularly limited. For example, the control unit 10 performs, as the preprocessing, processing which unifies uppercase and lowercase letters in the character strings. By this processing, uppercase and lowercase letters in the character strings are not distinguished. For example, the control unit 10 performs, as the preprocessing, processing which removes spaces and predetermined symbols.

After the processing in step #12, the control unit 10 performs item name region determination processing. When performing the item name region determination processing, the control unit 10 sets one of the plurality of first regions detected in the first region detection processing to the first region to be processed.

Then, the control unit 10 performs similarity degree calculation processing (processing in step #13) as one processing step in the item name region determination processing. In step #13, the control unit 10 determines a similarity degree between each of character strings of all the similar item names defined in a plurality of pieces of dictionary data DD and the character string in the first region to be processed. In the following description, a similarity degree between character strings is referred to as a character string similarity degree, and is distinguished from the image similarity degree.

When the similarity degree calculation processing is performed, the control unit 10 selects one of the plurality of pieces of dictionary data DD (here, the selected dictionary data DD is referred to as the target dictionary data DD). The control unit 10 also selects one of a plurality of similar item names defined in the target dictionary data DD (here, the selected similar item name is referred to as the target similar item name).

Then, the control unit 10 determines a similarity degree between the character string in the first region to be processed and the character string of the target similar item name. For example, equation (1) below is used, and thus it is possible to determine a similarity degree Sd between the character string in the first region to be processed and the character string of the target similar item name.

[Math. 1]

$$Sd = \frac{2M}{len(S_1) + len(S_2)} \in [0, 1] \quad (1)$$

In equation (1), S1 represents one character string, and S2 represents the other character string. For example, the character string of the similar item name defined in the dictionary data DD is S1, and the character string in the first region extracted from the image data of the identification card is S2. Here, len (S1) represents the number of characters in the character string S1, len (S2) represents the number of characters in the character string S2 and M represents the number of characters matched between the character string S1 and the character string S2.

For example, it is assumed that the character string S1 is "Number", and the character string S2 is "Nombern". Even when "Number" is described in the identification card, "Number" may be recognized as "Nombern" by erroneous recognition of the character recognition processing.

In this example, len (S1) = 6, and len (S2) =7. In the character string S1 and the character string S2, when counted from the first character, the first character "N", the third character "m", the fourth character "b", the fifth character "e" and the sixth character "r" match each other. Hence, M = 5.

In this example, the value of the similarity degree is 0.76923. If the character strings S1 and S2 are completely different characters (that is, M = 0), the value of the similarity degree is 0 whereas if the character strings S1 and S2 are completely the same characters (that is, if M = len (S1) = len (S2)), the value of the similarity degree is 1. In other words, in the calculation of the similarity degree between the character string in the first region to be processed and the character string of the target similar item name, as the similarity degree is increased, the value of the similarity degree is increased whereas as the similarity degree is lowered, the value of the similarity degree is decreased.

After determining the character string similarity degree between the character string in the first region to be processed and the character string of the target similar item name, the control unit 10 selects a new unselected similar item name from among the similar item names defined in the target dictionary data DD. The control unit 10 switches the target similar item names, and determines a character string similarity degree between the character string in the first region to be processed and the character string of the new target similar item name. The control unit 10 determines, for all the similar item names defined in the target dictionary data DD, the character string similarity degrees to the character string in the first region to be processed. Then, the control unit 10 associates the similar item name having the highest character string similarity degree to the character string in the first region to be processed among the similar item names defined in the target dictionary data DD with the value of the character string similarity degree thereof, and stores the similar item name.

The control unit 10 determines, for all the similar item names defined in the plurality of pieces of dictionary data DD, character string similarity degrees to the character string in the first region to be processed. In other words, the control unit 10 selects a new unselected piece of dictionary data DD from among the plurality of pieces of dictionary data DD. The control unit 10 switches the target dictionary data DD, and determines a character string similarity degree to the character string in the first region to be processed for all the similar item names defined in the new piece of target dictionary data DD. Then, the control unit 10 associates the similar item name having the highest character string similarity degree to the character string in the first region to be processed among the similar item names defined in the target dictionary data DD with the value of the character string similarity degree thereof, and stores the similar item name. In this way, a plurality of similar item names which respectively correspond to a plurality of types of items are stored one by one to correspond to the values of the character string similarity degrees. In other words, a plurality of similarity values (the similarity value is the value of the character string similarity degree) which respectively correspond to the plurality of types of items are stored.

The control unit 10 performs maximum value detection processing (processing in step #14) as one processing step in the item name region determination processing. In step #14, the control unit 10 compares the plurality of similarity values (the similarity value is the value of the character string similarity degree) determined and stored in the similarity degree calculation processing with each other. In other words, the control unit 10 compares the plurality of similarity values which respectively correspond to the plurality of types of items with each other.

Then, the control unit 10 detects the maximum value of the character string similarity degrees (that is, the highest similarity value). In other words, the control unit 10 determines the character string similarity degrees between the character string in the first region to be processed and the character strings of all the similar item names, and detects the maximum value of the determined similarity values.

The control unit 10 performs threshold value comparison processing (processing in step #15) as one processing step in the item name region determination processing. In step #15, the control unit 10 compares a predetermined threshold value for the item name region determination processing and the maximum value of the character string similarity degrees.

For example, in order to set the threshold value for the item name region determination processing, the multifunctional peripheral 100 actually reads the identification card, and acquires the result of the similarity degree calculation processing (here, the value of the result is referred to as the similarity value of the item name region) performed on the character string present in the region of the item name in the image data obtained by the reading. The result of the similarity degree calculation processing (here, the value of the result is referred to as the similarity value of another region) performed on the character string present in a region different from the region of the item name in the image data is also acquired. A plurality of similarity values of the item name regions are acquired, and a plurality of similarity values of other regions are acquired.

A first average value which is the average value of the plurality of similarity values of the item name regions is determined, and a second average value which is the average value of the plurality of similarity values of other regions is determined. Then, the average value of the first average value and the second average value is set to the threshold value for the item name region determination processing.

In step #16, the control unit 10 determines whether the maximum value of the character string similarity degrees is equal to or greater than the threshold value for the item name region determination processing. In FIG. 9, the threshold value for the item name region determination processing is represented by Th. When the control unit 10 determines that the maximum value of the character string similarity degrees is equal to or greater than the threshold value for the item name region determination processing, the processing proceeds to step #17.

In step #17, the control unit 10 determines that the first region to be processed is the region of the item name. In step #18, the control unit 10 determines the item corresponding to the first region to be processed based on the character string of the item name present in the first region to be processed (that is, the first region determined to be the region of the item name). Here, the character string in the first region to be processed is defined as the similar item name in any one piece of dictionary data DD. Hence, the control unit 10 recognizes the item corresponding to the dictionary data DD in which the character string in the first region to be processed is defined, and determines that the recognized item is the item corresponding to the first region to be processed.

In step #16, when the control unit 10 determines that the maximum value of the character string similarity degrees is less than the threshold value for the item name region determination processing, the processing proceeds to step #19. When the processing proceeds to step #19, the control unit 10 determines that the first region to be processed is another region (that is, a region different from the region of the item name).

The processing in steps #13 to #19 is performed as the processing steps in the item name region determination processing. After the completion of the item name region determination processing performed on a certain first region to be processed, the control unit 10 determines whether a first region which has not been subjected to the item name region determination processing (here, referred to as an unprocessed first region) is left. When an unprocessed first region is left, the control unit 10 sets the unprocessed first region to a new first region to be processed. In other words, the control unit 10 switches the first regions to be processed. Then, the control unit 10 performs the item name region determination processing (processing in steps #13 to #19) on the new first region to be processed.

In the present embodiment, the dictionary data DD in which a plurality of different similar item names are predefined for one type of item is previously stored in the storage unit 101 for each of a plurality of types of items. Then, the item name region determination processing is performed using the dictionary data DD. In this way, when the item which has a plurality of corresponding item names is to be masked, in an identification card including one of the plurality of item names, the item to be masked is properly masked, and it is possible to suppress the occurrence of an inconvenience in which the item to be masked is not masked (in other words, the item to be masked is not detected) in an identification card including another item name.

For example, it is assumed that an identification number is an item to be masked. In this case, in the present embodiment, even in either of an identification card including "ID" as the item name or an identification card including "Num" as the item name, the identification number is properly masked. On the other hand, in a conventional configuration, in the identification card including "ID" as the item name, the identification number is properly masked whereas in the identification card including "Num" as the item name, an inconvenience may occur in which the identification number is not masked.

In order to suppress the occurrence of such an inconvenience, a large dictionary is required. In a method using a machine learning model, a model size is increased. However, a memory capacity is limited, and thus processing needs to be performed in the cloud.

In the present embodiment, the dictionary data DD is used, and thus processing in the cloud is not required. In other words, it is not necessary to transfer the image data of the identification card (that is, the personal information) to the processing device in the cloud. In this way, it is possible to suppress the leakage of the personal information. In other words, in the present embodiment, it is possible to easily mask only the region corresponding to the item specified by the user in the image data obtained by reading the document D (identification card) without transferring the image data of the identification card to the processing device in the cloud.

Since in the present embodiment, the character string similarity degrees between the character string in the first region to be processed and the character strings of all the similar item names are determined, and when the maximum value of the determined character string similarity degrees is equal to or greater than the threshold value, the first region to be processed is determined to be the region of the item name, even if erroneous recognition occurs in the character recognition processing, it is possible to accurately detect the region of the item name.

<Abnormality countermeasure processing>

First abnormality countermeasure processing will first be described.

In general, a plurality of items related to personal information included in an identification card are different from each other. For example, it is unlikely that a plurality of items of "name" are provided in a single identification card. However, when the accuracy of the character recognition processing on the image data of the identification card is low, a plurality of item names (character strings thereof) corresponding to the same item may be extracted from the image data of the identification card. When a part of the identification card is, for example, soiled or discolored or when a resolution when the identification card is read is low, the accuracy of the character recognition processing is lowered.

In order to suppress the occurrence of such an inconvenience, the control unit 10 performs the first abnormality countermeasure processing. Specifically, when the character string in each of a plurality of first regions determined to be the regions of the item names corresponds to a first item which is the same item, the control unit 10 determines that, among the plurality of first regions, the first region including a character string having the highest maximum value is a region corresponding to the first item, and determines that the remaining first region is not a region corresponding to the first item. In other words, the control unit 10 corrects the result of the item name region determination processing.

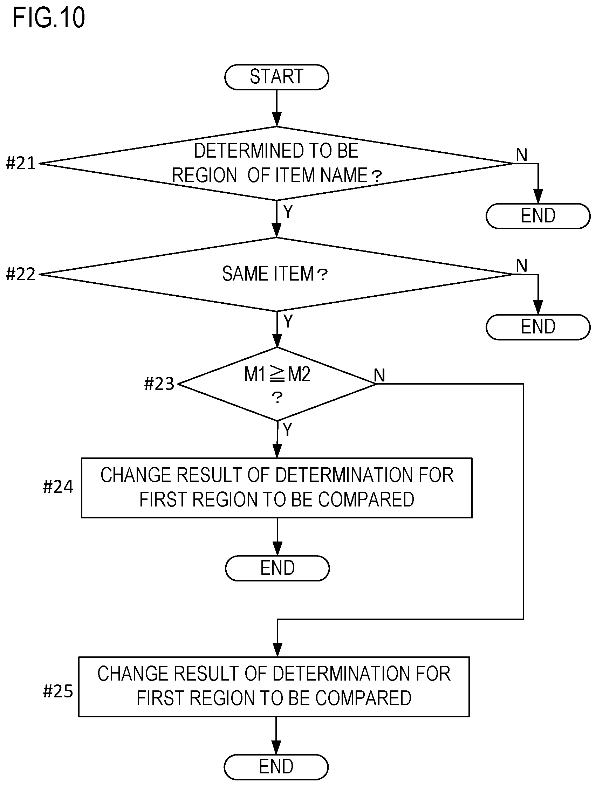

The flow of the first abnormality countermeasure processing will be described below with reference to a flowchart shown in FIG. 10. The flow shown in FIG. 10 is started when the item name region determination processing (that is, the processing along the flow shown in FIG. 9) performed by the control unit 10 is completed. After completing the item name region determination processing, the control unit 10 subsequently performs the first abnormality countermeasure processing on the first region to be processed.

In step #21, the control unit 10 determines whether the first region to be processed is determined to be the region of the item name. When the control unit 10 determines that the first region to be processed is the region of the item name, the processing proceeds to step #22. When the control unit 10 determines that the first region to be processed is not the region of the item name, the flow is completed.

In step #22, the control unit 10 determines whether the item corresponding to the first region to be processed is the same as an item corresponding to the other first region. In other words, the control unit 10 determines whether the character string in each of the plurality of first regions determined to be the regions of the item names corresponds to the same item (first item).

When in step #22, the control unit 10 determines that the item corresponding to the first region to be processed is the same as the item corresponding to the other first region, the processing proceeds to step #23. In other words, when the control unit 10 determines that the character string in each of the plurality of first regions determined to be the regions of the item names corresponds to the same item (first item), the processing proceeds to step #23. When the control unit 10 determines that the item corresponding to the first region to be processed is different from the item corresponding to the other first region, the flow is completed. In the following description, the other first region which has the same corresponding item as the item corresponding to the first region to be processed is referred to as the first region to be compared.

In step #23, the control unit 10 recognizes, for each of the first region to be processed and the first region to be compared, the maximum value determined in the maximum value detection processing (that is, the processing in step #14 shown in FIG. 9). Then, the control unit 10 compares the maximum values in the first region to be processed and the first region to be compared with each other. Consequently, the maximum values in the first region to be processed and the first region to be compared are compared with each other. For example, the control unit 10 determines whether the maximum value M1 in the first region to be processed is equal to or greater than the maximum value M2 in the first region to be compared.

When in step #23, the control unit 10 determines that the maximum value M1 in the first region to be processed is equal to or greater than the maximum value M2 in the first region to be compared, the processing proceeds to step #24. When the control unit 10 determines that the maximum value M1 in the first region to be processed is less than the maximum value M2 in the first region to be compared, the processing proceeds to step #25.

When the processing proceeds to step #24, the control unit 10 changes the result of the determination for the first region to be compared without changing the result of the determination that the first region to be processed is the region corresponding to the first item. Specifically, the control unit 10 recognizes a second item which is the item corresponding to the similar item name having the second highest character string similarity degree to the character string in the first region to be compared, and determines that the first region to be compared is a region corresponding to the second item.

When the processing proceeds to step #25, the control unit 10 changes the result of the determination for the first region to be processed without changing the result of the determination that the first region to be compared is the region corresponding to the first item. Specifically, the control unit 10 recognizes a second item which is the item corresponding to the similar item name having the second highest character string similarity degree to the character string in the first region to be processed, and determines that the first region to be processed is a region corresponding to the second item.

In other words, in steps #23 to #25, the following processing is performed.

When the character string in each of the plurality of first regions determined to be the regions of the item names corresponds to the first item which is the same item, the control unit 10 determines that, among the plurality of first regions, the first region including a character string having the highest maximum value is a region corresponding to the first item. The control unit 10 recognizes the second item which is the item corresponding to the similar item name having the second highest character string similarity degree to the character string in the first region which is not determined to be the region corresponding to the first item among the plurality of first regions, and determines that the first region which is not determined to be the region corresponding to the first item is the region corresponding to the second item.

Second abnormality countermeasure processing and third abnormality countermeasure processing will then be described.

In an identification card, a plurality of item fields are provided. In each of the item fields, one item name is described, and it is unlikely that a plurality of item names are described in one item field. In other words, in general, among a plurality of first regions included in the same second region, two or more first regions are not determined to be the regions of the item names. In general, among the plurality of first regions included in the same second region, one first region is determined to be the region of the item name. However, when the accuracy of the character recognition processing on the image data of the identification card is low, among the plurality of first regions included in the same second region, two or more first regions may be determined to be the regions of the item names, and no first region may be determined to be the region of the item name.

Hence, the control unit 10 performs the second abnormality countermeasure processing and the third abnormality countermeasure processing. Here, the plurality of first regions included in the same second region are associated with each other. Therefore, the control unit 10 performs the second abnormality countermeasure processing or the third abnormality countermeasure processing on the plurality of first regions associated with each other.

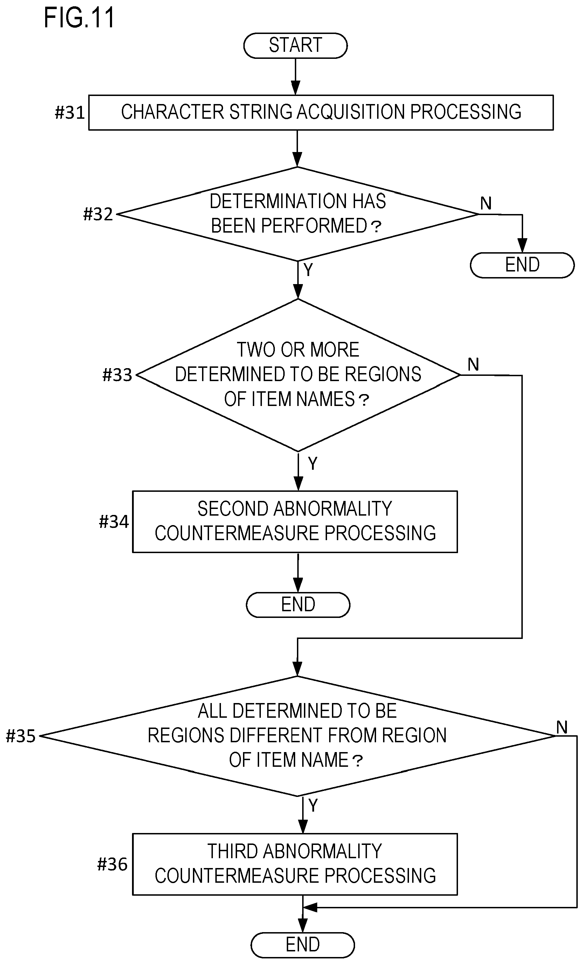

The flows of the second abnormality countermeasure processing and the third abnormality countermeasure processing will be described below with reference to flowcharts shown in FIGS. 11 to 13.

The control unit 10 first performs processing along the flow shown in FIG. 11. The flow shown in FIG. 11 is started when the region determination processing (that is, the processing along the flow shown in FIG. 9) performed by the control unit 10 is completed. After completing the item name region determination processing, the control unit 10 subsequently performs the processing along the flow shown in FIG. 11.

In step #31, the control unit 10 performs character string acquisition processing which acquires a character string in a first region associated with the first region to be processed. Then, in step #32, the control unit 10 determines whether the region determination processing has been performed on the first region including the character string acquired in the character string acquisition processing (that is, whether the determination has been performed). When the control unit 10 determines that the determination has been performed, the processing proceeds to step #33 whereas when the control unit 10 determines that the determination has not been performed, the flow is completed.

In step #33, the control unit 10 determines whether both the first region to be processed and the first region associated with the first region to be processed have been determined to be the regions of the item names. In other words, the control unit 10 determines whether among a plurality of first regions associated with each other, two or more first regions have been determined to be the regions of the item names.

When in step #33, the control unit 10 determines that among the plurality of first regions associated with each other, two or more first regions have been determined to be the regions of the item names, the processing proceeds to step #34. When the processing proceeds to step #34, the control unit 10 performs the second abnormality countermeasure processing.

When in step #33, the control unit 10 determines that among the plurality of first regions associated with each other, two or more first regions have not been determined to be the regions of the item names, the processing proceeds to step #35. In step #35, the control unit 10 determines whether both the first region to be processed and the first region associated with the first region to be processed have been determined to be regions different from the region of the item name. In other words, the control unit 10 determines whether all the plurality of first regions associated with each other have been determined to be regions different from the region of the item name.

When in step #35, the control unit 10 determines that all the plurality of first regions associated with each other have been determined to be regions different from the region of the item name, the processing proceeds to step #36. When the processing proceeds to step #36, the control unit 10 performs the third abnormality countermeasure processing.

When in step #35, the control unit 10 does not determine that all the plurality of first regions associated with each other are regions different from the region of the item name, the flow is completed. In other words, the control unit 10 determines that only one of the plurality of first regions associated with each other is the region of the item name, neither the second abnormality countermeasure processing nor the third abnormality countermeasure processing is performed.

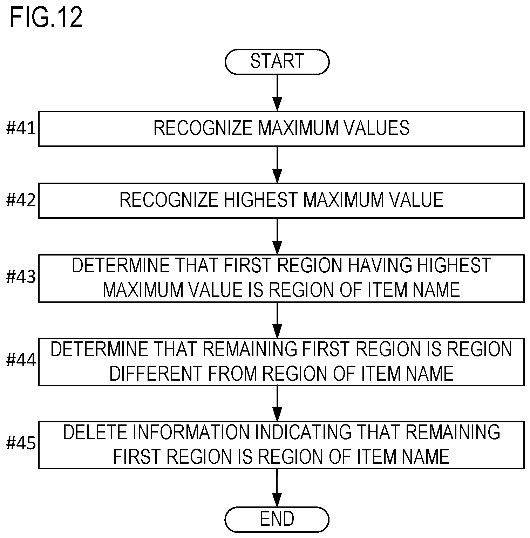

As the second abnormality countermeasure processing, processing along the flow shown in FIG. 12 is performed. In other words, when the control unit 10 determines that among the plurality of first regions associated with each other (that is, the plurality of first regions included in the same second region), two or more first regions are the regions of the item names, the processing along the flow shown in FIG. 12 is performed.

In step #41, the control unit 10 recognizes the maximum value determined in the maximum value detection processing (that is, the processing in step #14 in FIG. 9) for each of the plurality of first regions associated with each other. In step #42, the control unit 10 also recognizes the highest maximum value.

Then, in step #43, the control unit 10 determines that among the plurality of first regions associated with each other, the first region including a character string having the highest maximum value (here, referred to as the first region having the highest maximum value) is the region of the item name. In step #44, the control unit 10 determines that among the plurality of first regions associated with each other, the remaining first region other than the first region having the highest maximum value is a region different from the region of the item name.

Here, when the first region present in the image data of the identification card is determined to be the region of the item name, the control unit 10 stores information indicating that the first region described above is a region corresponding to the item name. In this configuration, when the second abnormality countermeasure processing has been performed, for the first region which is redetermined to be a region different from the region of the item name, information indicating that the first region described above is a region corresponding to the item name needs to be deleted. Hence, in step #45, the control unit 10 deletes information indicating that the remaining first region other than the first region having the highest maximum value is a region corresponding to the item name.

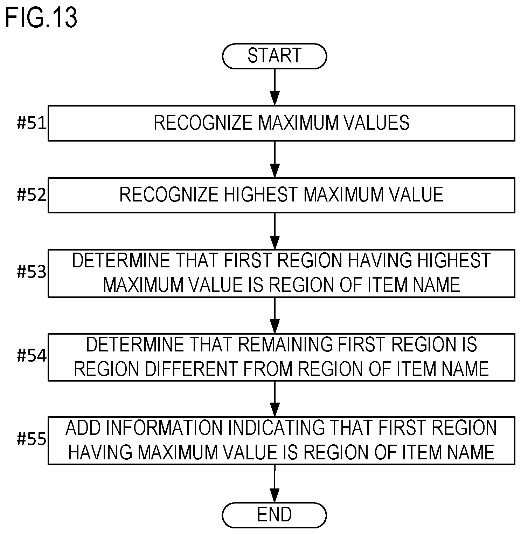

As the third abnormality countermeasure processing, processing along the flow shown in FIG. 13 is performed. In other words, when the control unit 10 determines that all the plurality of first regions associated with each other (that is, the plurality of first regions included in the same second region) are regions different from the region of the item name, the processing along the flow shown in FIG. 13 is performed.

In step #51, the control unit 10 recognizes the maximum value determined in the maximum value detection processing (that is, the processing in step #14 in FIG. 9) for each of the plurality of first regions associated with each other. In step #52, the control unit 10 recognizes the highest maximum value.

Then, in step #53, the control unit 10 determines that among the plurality of first regions associated with each other, the first region including a character string having the highest maximum value (here, referred to as the first region having the highest maximum value) is the region of the item name. In step #54, the control unit 10 determines that among the plurality of first regions associated with each other, the remaining first region other than the first region having the maximum value is a region different from the region of the item name.

Here, when determining that the first region present in the image data of the identification card is the region of the item name, the control unit 10 stores information indicating that the first region described above is a region corresponding to the item name. In this configuration, when the third abnormality countermeasure processing has been performed, for the first region which is redetermined to be the region of the item name in the processing described above, information indicating that the first region described above is a region corresponding to the item name needs to be added. Hence, in step #55, the control unit 10 adds information indicating that the first region having the highest maximum value is a region corresponding to the item name.

In the present embodiment, the first to third abnormality countermeasure processing is performed, and thus it is possible to suppress the occurrence of an inconvenience in which a plurality of regions of the item names corresponding to the same item are detected, and to suppress the occurrence of an inconvenience in which the region of the item name is not detected.

<Setting of masking job>

In the masking job, the setting of the masking job can be performed by the user. The setting of the masking job is performed via the operation display unit 3. For example, an item (that is, a target item) corresponding to an item value to be masked can be specified.

Specifically, the operation display unit 3 receives an item specification operation which specifies one of items. The control unit 10 recognizes, as a target item, the item specified in the item specification operation. Then, the control unit 10 performs, as the masking processing, processing which masks at least the region of the item value in the region of the target item present in the image data of the identification card to generate the masked data.

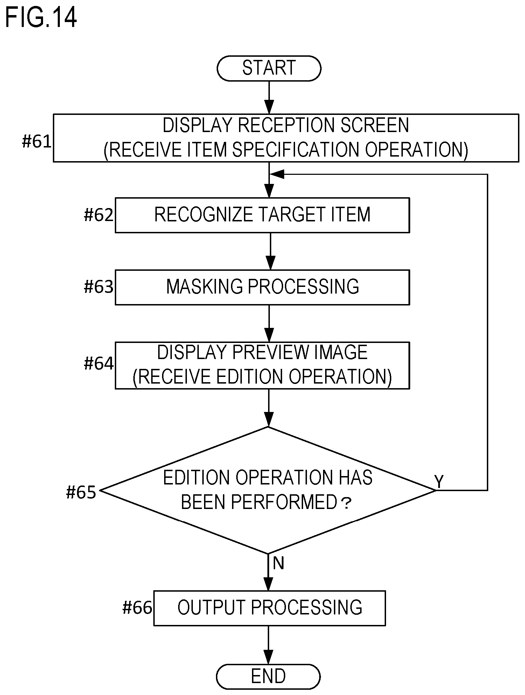

The flow of processing performed by the control unit 10 when the setting of the masking job is received will be described below with reference to a flowchart shown in FIG. 14. For example, in the masking job, after the image reading unit 2 reads the identification card, the operation display unit 3 receives the item specification operation before the masking processing is started. In other words, the flow shown in FIG. 14 is started after the processing in step #1 shown in FIG. 4 and before the processing in step #7.

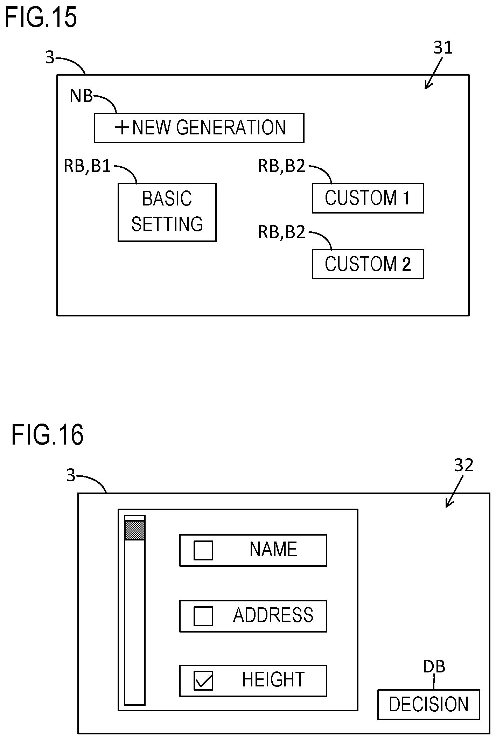

In step #61, the operation display unit 3 displays a reception screen 31 as shown in FIG. 15. On the reception screen 31, reception buttons RB are arranged. As the reception button RB, a basic setting button B1 or a custom button B2 is provided. The operation display unit 3 receives, as the item specification operation, an operation performed on one of the reception buttons RB. The control unit 10 determines an item (that is, a target item) specified by the user based on which of the reception buttons RB the item specification operation is performed on.

Specifically, the storage unit 101 stores a masking list in which at least one item is registered. The reception button RB is caused to correspond to the masking list. When a plurality of masking lists are present, a plurality of reception buttons RB (specifically, the same number as the number of masking lists) are displayed on the reception screen 31. The reception buttons RB are caused to correspond to different masking lists, respectively.

In the masking list corresponding to the basic setting button B1, an item which is previously selected by the manufacturer is registered. In the masking list corresponding to the custom button B2, an item which is arbitrarily selected by the user is registered. A new masking list is generated, and thus a custom button B2 (that is, a reception button RB) corresponding to the generated new masking list is displayed on the reception screen 31.

In order to receive a request to generate a new masking list from the user, a new generation button NB is displayed on the reception screen 31. The operation display unit 3 receives an operation performed on the new generation button NB as the request to generate a new masking list.

When receiving the request to generate a new masking list, the operation display unit 3 displays a registration screen 32 as shown in FIG. 16 to receive a registration operation for selecting an item to be registered from the user. On the registration screen 32, a plurality of items (item names thereof) are displayed as options.

The operation display unit 3 receives, as the registration operation, an operation performed on the display field of one of the items being displayed. For example, when an item "height" is desired to be registered, the display field of the item "height" is operated, and thus it is possible to select the item "height" as the item to be registered. A check mark is placed in the display field of the item selected in the registration operation. A decision button DB in the registration screen 32 is operated, and thus it is possible to complete the selection of the item performed in the registration operation.

When the operation is performed on the decision button DB, the control unit 10 determines that the reception of the registration operation is completed. After the registration operation is received, the control unit 10 generates a new masking list in which the item selected in the registration operation is registered, and stores the new masking list in the storage unit 101.

When a new masking list is generated, and the operation display unit 3 subsequently receives the item specification operation, the control unit 10 causes the operation display unit 3 to display the reception screen 31 on which the reception button RB corresponding to the new masking list is arranged in addition to the reception button RB corresponding to the existing masking list.

When one of the reception buttons RB is operated, the control unit 10 determines that the operation display unit 3 receives the item specification operation. Here, the control unit 10 determines that the masking list corresponding to the reception button RB on which the item specification operation has been performed is specified. In other words, the item specification operation is an operation for specifying one of the masking lists.

With reference back to FIG. 14, in step #62, the control unit 10 recognizes the reception button RB on which the item specification operation has been performed, that is, the masking list specified in the item specification operation. Then, the control unit 10 recognizes, as the target item, the item registered in the masking list specified in the item specification operation.

In step #63, the control unit 10 performs the masking processing. The processing in step #63 is the same as the processing in step #7 shown in FIG. 7. The control unit 10 performs the masking processing after performing the processing in steps #2 to #6 shown in FIG. 4.

In step #64, the control unit 10 causes the operation display unit 3 to display a preview image (not shown) showing the content of the masked data, and causes the operation display unit 3 to receive an edition operation which edits the masked data. The edition operation is an operation which changes the item to be masked. Specifically, the edition operation includes an operation which newly adds one of the items as the item to be masked and an operation which removes a masked item from the item to be masked.

In step #65, the control unit 10 determines whether the edition operation has been performed. When the edition operation has been performed, the processing proceeds to step #61. Thereafter, when the processing proceeds to step #63, the control unit 10 newly generates the masked data which reflects the content of edition in the edition operation.

When in step #65, the edition operation has not been performed, the processing proceeds to step #66. In step #66, the control unit 10 causes the output unit to perform the output processing on the masked data. The processing in step #66 is the same as the processing in step #8 shown in FIG. 4.

In the present embodiment, the identification card is scanned, and then the item specification operation which specifies the item to be masked (that is, the target item) is received. The item specification operation is performed, and thus at least the region of the item value in the region of the target item present in the image data of the identification card is masked. In other words, it is possible to easily mask only the region corresponding to the item specified by the user in the image data obtained by reading the document D (identification card).

For example, in the conventional configuration, it is necessary to scan the identification card in advance to register the region of the item to be masked (position in the image data). In other words, it is necessary to register the identification card in advance. In the conventional configuration, the identification card is registered in advance, and thus it is possible to mask the desired region in the image data of the identification card.

However, it is burdensome for the user to register the identification card in advance. If there are a large number of types of identification cards to be registered, it is necessary to register the identification card in advance for each of the types, and thus the amount of work for the registration is increased. It is impossible to flexibly change the item to be masked. When the item to be masked is desired to be changed, the identification card needs to be registered again, with the result that it is burdensome to do so.

On the other hand, in the present embodiment, when the item specification operation is performed, and thus an identification card is read, the region of an item specified in the item specification operation in the image data is masked whereas even when another identification card different in type from the identification card described above is read, the region of an item specified in the item specification operation in the image data is masked. For example, when the item to be masked is an item A, and an item B needs to be further added as the item to be masked (that is, when the item to be masked needs to be changed), it is sufficient to specify the item A and the item B in the item specification operation. Hence, it is not necessary to register the identification card in advance, and thus convenience for the user is enhanced.

In the present embodiment, the item specification operation is an operation which specifies the masking list. Hence, when a plurality of items are desired to be masked, it is not necessary to specify items desired to be masked one by one. In this way, convenience for the user is more enhanced.

In the present embodiment, it is possible to generate a new masking list. It is convenient for the user to do so because the masking list can be arbitrarily generated.

In the present embodiment, the masked data can be edited, and thus convenience for the user is enhanced. Here, when the masked data is edited, the preview image showing the content of the masked data is displayed. In this way, it is possible to edit the masked data while previewing the masked data, and thus an operation which edits the masked data can be efficiently performed.

It should be considered that the embodiment disclosed herein is illustrative in all respects, and not restrictive. The scope of the present invention is indicated not by the description of the above embodiment but by the scope of claims, and furthermore, meanings equivalent to the scope of claims and all changes in the scope are included therein.

**Claims**

1. An image processing device comprising:

    an image reading unit that reads a document including a plurality of items each having a set of an item name and an item value, the plurality of items being related to personal information;
    a control unit that

        recognizes a target item that is an item to be masked, and
        performs masking processing on image data obtained by reading the document with the image reading unit to generate masked data in which at least a part of a region of the target item present in the image data is masked; and

    an operation display unit that displays information and receives an operation, wherein the operation display unit receives an item specification operation that specifies one of the plurality of items, and the control unit

        recognizes, as the target item, the item specified in the item specification operation, and
        performs, as the masking processing, processing that masks at least a region of an item value in the region of the target item present in the image data to generate the masked data.

2. The image processing device according to claim 1, further comprising:

    a storage unit that stores a masking list in which at least one of the plurality of items are registered,
wherein the item specification operation is an operation that specifies one of masking lists each being the masking list, and
the control unit recognizes, as the target item, the item registered in the masking list specified in the item specification operation.

3. The image processing device according to claim 2,

    wherein the operation display unit receives a request to generate a new masking list,
    when receiving the request, the operation display unit receives a registration operation that selects an item to be registered and
    after the registration operation is received, the control unit generates the new masking list in which the item selected in the registration operation is registered, and stores the new masking list in the storage unit.

4. The image processing device according to claim 1,

    wherein after generating the masked data, the control unit

        causes the operation display unit to display a preview image showing a content of the masked data, and
        causes the operation display unit to receive an edition operation that edits the masked data,

    the edition operation includes

        an operation that newly adds one of the plurality of items as the item to be masked; and
        an operation that removes a masked item from the item to be masked and

    when the edition operation is performed, the control unit newly generates the masked data that reflects a content of edition in the edition operation performed.

5. The image processing device according to claim 1, further comprising:

    an output unit that performs output processing on the masked data,
    wherein the output unit is at least one of

        a printing unit that performs, as the output processing, printing of an image based on the masked data on a sheet and
        a communication unit that performs, as the output processing, transmission of the masked data to an external device.

6. An image processing device comprising:

an image reading unit that reads a document including a plurality of items each having a set of an item name and an item value, the plurality of items being related to personal information; and a control unit that

recognizes a target item that is an item to be masked, and performs masking processing on image data obtained by reading the document with the image reading unit to generate masked data in which at least a part of a region of the target item present in the image data is masked,

wherein the control unit performs

first region detection processing that detects, from the image data, a first region predicted to individually include either a region of the item name or a region of the item value, second region detection processing that detects, from the image data, a second region predicted to include both a region of the item name and a region of the item value corresponding to the same item, inclusion region detection processing that

is performed on each of a plurality of first regions each being the first region, and detects the second region including an image part in which an image similarity degree to the first region to be processed is equal to or greater than a threshold value to detect the second region including the first region to be processed and

region association processing that associates the plurality of first regions included in the same second region with each other.

7. The image processing device according to claim 6, further comprising:

a storage unit, wherein the storage unit previously stores

a trained first learning model that has been subjected to machine learning to detect the first region from the image data and a trained second learning model that has been subjected to machine learning to detect the second region from the image data, and

the control unit

uses the first learning model to perform, as the first region detection processing, processing that detects the first region from the image data, and uses the second learning model to perform, as the second region detection processing, processing that detects the second region from the image data

8. The image processing device according to claim 6, further comprising:

an output unit that performs output processing on the masked data, wherein the output unit is at least one of

a printing unit that performs, as the output processing, printing of an image based on the masked data on a sheet and a communication unit that performs, as the output processing, transmission of the masked data to an external device.

9. An image processing device comprising:

an image reading unit that reads a document including a plurality of items each having a set of an item name and an item value, the plurality of items being related to personal information; a control unit that

recognizes a target item that is an item to be masked, and performs masking processing on image data obtained by reading the document with the image reading unit to generate masked data in which at least a part of a region of the target item present in the image data is masked; and

a storage unit, wherein the storage unit stores, for each of a plurality of types of the plurality of items, dictionary data in which a plurality of different similar item names are predefined for one type of the item, and the control unit performs

first region detection processing that detects, from the image data, a first region predicted to individually include either a region of the item name or a region of the item value,

character recognition processing that recognizes a character string in the first region and

item name region determination processing that

is performed on each of a plurality of first regions each being the first region, determines a character string similarity degree between a character string in the first region to be processed and each of character strings of all the similar item names and

determines that the first region to be processed is the region of the item name when a maximum value of the character string similarity degrees determined is equal to or greater than a threshold value.

10. The image processing device according to claim 9, wherein when the character string in each of the plurality of first regions determined to be the regions of the item names corresponds to a first item that is the same item, the control unit determines that, among the plurality of first regions determined to be the regions of the item names, the first region including a character string having a highest maximum value is a region corresponding to the first item.

11. The image processing device according to claim 10, wherein the control unit

recognizes a second item that is an item corresponding to a similar item name having a second highest character string similarity degree to a character string in a first region that is not determined to be the region corresponding to the first item among the plurality of first regions determined to be the regions of the item names, and

determines that the first region that is not determined to be the region corresponding to the first item is a region corresponding to the second item.

12. The image processing device according to claim 9, wherein the control unit performs

second region detection processing that detects, from the image data, a second region predicted to include both a region of the item name and a region of the item value corresponding to the same item and region association processing that associates the plurality of first regions included in the same second region with each other, and

when among the plurality of first regions associated with each other, two or more first regions are determined to be the regions of the item names, the control unit

determines that among the plurality of first regions associated with each other, the first region including a character string having a highest maximum value is the region of the item name, and

determines that the remaining first region is a region different from the region of the item name.

13. The image processing device according to claim 9, wherein the control unit performs

second region detection processing that detects, from the image data, a second region predicted to include both a region of the item name and a region of the item value corresponding to the same item and region association processing that associates the plurality of first regions included in the same second region with each other, and

when all the plurality of first regions associated with each other are determined to be regions different from the region of the item name, the control unit

determines that among the plurality of first regions associated with each other, the first region including a character string having a highest maximum value is the region of the item name, and

determines that the remaining first region is a region different from the region of the item name.

14. The image processing device according to claim 9, further comprising:

an output unit that performs output processing on the masked data, wherein the output unit is at least one of

a printing unit that performs, as the output processing, printing of an image based on the masked data on a sheet and

a communication unit that performs, as the output processing, transmission of the masked data to an external device.

FIG.1

FIG.2

MULTIFUNCTIONAL PERIPHERAL                                    100

CONTROL UNIT                                                 10

PRINTING UNIT                                                1

IMAGE READING UNIT                                           2

OPERATION DISPLAY UNIT                                       3

STORAGE UNIT                                                 101

DICTIONARY DATA                                              DD

DICTIONARY DATA                                              DD

COMMUNICATION UNIT                                           102

PC                                                           1000

NETWORK                                                      NT

PC                                                           1000

PC                                                           1000

FIG.3

D

| | |
|---|---|
| | Name        aaaa |
| | Date of Birth
cccc |
| | Address    bbbb |

FIG.4

```
                        ┌─────────────┐
                        │    START    │
                        └─────────────┘
                               │
                               ▼
        #1  ┌──────────────────────────────────────────┐
            │   READ IDENTIFICATION CARD (DOCUMENT)     │
            └──────────────────────────────────────────┘
                               │
                               ▼
        #2  ┌──────────────────────────────────────────┐
            │      FIRST REGION DETECTION PROCESSING    │
            └──────────────────────────────────────────┘
                               │
                               ▼
        #3  ┌──────────────────────────────────────────┐
            │     SECOND REGION DETECTION PROCESSING    │
            └──────────────────────────────────────────┘
                               │
                               ▼
        #4  ┌──────────────────────────────────────────┐
            │   INCLUSION REGION DETECTION PROCESSING   │
            └──────────────────────────────────────────┘
                               │
                               ▼
        #5  ┌──────────────────────────────────────────┐
            │       REGION ASSOCIATION PROCESSING       │
            └──────────────────────────────────────────┘
                               │
                               ▼
        #6  ┌──────────────────────────────────────────┐
            │     REGION DETERMINATION PROCESSING       │
            └──────────────────────────────────────────┘
                               │
                               ▼
        #7  ┌──────────────────────────────────────────┐
            │           MASKING PROCESSING              │
            └──────────────────────────────────────────┘
                               │
                               ▼
        #8  ┌──────────────────────────────────────────┐
            │           OUTPUT PROCESSING               │
            └──────────────────────────────────────────┘
                               │
                               ▼
                        ┌─────────────┐
                        │     END     │
                        └─────────────┘
```

FIG.5

C11     C12

Name     aaaa

C31

Date of Birth

cccc

C32

C21     C22

Address     bbbb

FIG.6

C10

Name     aaaa

C30

Date of Birth

cccc

C20

Address     bbbb

FIG.7

C11  C12

Name  aaaa

C31

Date of Birth

C32

C21  C22

Address  bbbb

FIG.8

| ITEM A | | | | ITEM B | | | | • • • |
|---|---|---|---|---|---|---|---|---|
| a1 | a2 | a3 | • • • | a1 | a2 | a3 | • • • | • • • |

DD  DD

# FIG.9

START

#11 | CHARACTER RECOGNITION PROCESSING

#12 | PREPROCESSING

#13 | SIMILARITY DEGREE CALCULATION PROCESSING

#14 | MAXIMUM VALUE DETECTION PROCESSING

#15 | THRESHOLD VALUE COMPARISON PROCESSING

#16 | MAXIMUM VALUE $\geqq$ Th ? — N

Y

#17 | DETERMINED TO BE REGION OF ITEM NAME

#18 | DETERMINE ITEM

END

#19 | DETERMINED TO BE ANOTHER REGION

END

# FIG.10

```
                    ┌─────────────┐
                    │    START    │
                    └─────────────┘
                           │
                           ▼
              ╱─────────────────────────╲
#21 ─────────╱   DETERMINED TO BE        ╲──── N ──┐
             ╲   REGION OF ITEM NAME ?   ╱         │
              ╲─────────────────────────╱          ▼
                           │ Y              ┌─────────────┐
                           │                │     END     │
                           ▼                └─────────────┘
              ╱─────────────────────────╲
#22 ─────────╱        SAME ITEM ?        ╲──── N ──┐
             ╲                           ╱         │
              ╲─────────────────────────╱          ▼
                           │ Y              ┌─────────────┐
                           │                │     END     │
                           ▼                └─────────────┘
                    ╱───────────╲
#23 ──────────────╱   M1 ≧ M2    ╲──── N ──────────────┐
                  ╲      ?       ╱                      │
                    ╲───────────╱                       │
                           │ Y                          │
                           ▼                            │
      ┌──────────────────────────────────────┐         │
#24   │ CHANGE RESULT OF DETERMINATION FOR    │         │
      │ FIRST REGION TO BE COMPARED           │         │
      └──────────────────────────────────────┘         │
                           │                            │
                           ▼                            │
                    ┌─────────────┐                     │
                    │     END     │                     │
                    └─────────────┘                     │
                                                        ▼
      ┌──────────────────────────────────────┐
#25   │ CHANGE RESULT OF DETERMINATION FOR    │
      │ FIRST REGION TO BE COMPARED           │
      └──────────────────────────────────────┘
                           │
                           ▼
                    ┌─────────────┐
                    │     END     │
                    └─────────────┘
```

FIG.11

```
                        ┌─────────────┐
                        │    START    │
                        └─────────────┘
                               │
                               ▼
#31  ┌──────────────────────────────────────────────────┐
     │        CHARACTER STRING ACQUISITION PROCESSING     │
     └──────────────────────────────────────────────────┘
                               │
                               ▼
              ╱───────────────────────────╲
#32          ╱      DETERMINATION HAS       ╲        N    ┌─────────┐
             ╲      BEEN PERFORMED ?        ╱ ──────────▶ │   END   │
              ╲───────────────────────────╱             └─────────┘
                            │ Y
                            ▼
              ╱───────────────────────────╲
             ╱       TWO OR MORE            ╲
#33         ╱   DETERMINED TO BE REGIONS     ╲     N
            ╲      OF ITEM NAMES ?           ╱ ──────────┐
             ╲                              ╱            │
              ╲───────────────────────────╱             │
                            │ Y                          │
                            ▼                            │
#34  ┌──────────────────────────────────┐               │
     │        SECOND ABNORMALITY          │              │
     │   COUNTERMEASURE PROCESSING        │              │
     └──────────────────────────────────┘               │
                            │                            │
                            ▼                            │
                     ┌─────────┐                         │
                     │   END   │                         │
                     └─────────┘                         │
                                                         │
                            ┌────────────────────────────┘
                            ▼
              ╱───────────────────────────────────────╲
#35          ╱         ALL DETERMINED TO BE             ╲      N
             ╲  REGIONS DIFFERENT FROM REGION           ╱ ──────────┐
              ╲          OF ITEM NAME ?                 ╱           │
               ╲───────────────────────────────────────╱           │
                            │ Y                                     │
                            ▼                                       │
#36  ┌──────────────────────────────────┐                          │
     │         THIRD ABNORMALITY          │                         │
     │   COUNTERMEASURE PROCESSING        │ ◀───────────────────────┘
     └──────────────────────────────────┘
                            │
                            ▼
                     ┌─────────┐
                     │   END   │
                     └─────────┘
```

FIG.12

```
                    ┌─────────────┐
                    │    START    │
                    └─────────────┘
                           │
                           ▼
#41  ┌─────────────────────────────────────────────────────┐
     │           RECOGNIZE MAXIMUM VALUES                   │
     └─────────────────────────────────────────────────────┘
                           │
                           ▼
#42  ┌─────────────────────────────────────────────────────┐
     │         RECOGNIZE HIGHEST MAXIMUM VALUE              │
     └─────────────────────────────────────────────────────┘
                           │
                           ▼
#43  ┌─────────────────────────────────────────────────────┐
     │   DETERMINE THAT FIRST REGION HAVING HIGHEST         │
     │   MAXIMUM VALUE IS REGION OF ITEM NAME               │
     └─────────────────────────────────────────────────────┘
                           │
                           ▼
#44  ┌─────────────────────────────────────────────────────┐
     │   DETERMINE THAT REMAINING FIRST REGION IS REGION    │
     │   DIFFERENT FROM REGION OF ITEM NAME                 │
     └─────────────────────────────────────────────────────┘
                           │
                           ▼
#45  ┌─────────────────────────────────────────────────────┐
     │   DELETE INFORMATION INDICATING THAT REMAINING       │
     │   FIRST REGION IS REGION OF ITEM NAME                │
     └─────────────────────────────────────────────────────┘
                           │
                           ▼
                    ┌─────────────┐
                    │     END     │
                    └─────────────┘
```

FIG.13

```
                    ( START )
                        │
                        ▼
        ┌──────────────────────────────────┐
  #51   │      RECOGNIZE MAXIMUM VALUES     │
        └──────────────────────────────────┘
                        │
                        ▼
        ┌──────────────────────────────────┐
  #52   │   RECOGNIZE HIGHEST MAXIMUM VALUE │
        └──────────────────────────────────┘
                        │
                        ▼
        ┌──────────────────────────────────────┐
  #53   │ DETERMINE THAT FIRST REGION HAVING HIGHEST │
        │  MAXIMUM VALUE IS REGION OF ITEM NAME  │
        └──────────────────────────────────────┘
                        │
                        ▼
        ┌──────────────────────────────────────┐
  #54   │   DETERMINE THAT REMAINING FIRST REGION IS │
        │ REGION DIFFERENT FROM REGION OF ITEM NAME │
        └──────────────────────────────────────┘
                        │
                        ▼
        ┌──────────────────────────────────────┐
  #55   │ ADD INFORMATION INDICATING THAT FIRST REGION │
        │ HAVING MAXIMUM VALUE IS REGION OF ITEM NAME │
        └──────────────────────────────────────┘
                        │
                        ▼
                    ( END )
```

FIG.14

```
                    ┌─────────────┐
                    │    START    │
                    └─────────────┘
                           │
                           ▼
      ┌──────────────────────────────────────────────┐
  #61 │           DISPLAY RECEPTION SCREEN            │
      │    (RECEIVE ITEM SPECIFICATION OPERATION)     │
      └──────────────────────────────────────────────┘
                           │      ◄──────────────────┐
                           ▼                          │
         ┌──────────────────────────────────┐        │
     #62 │        RECOGNIZE TARGET ITEM      │        │
         └──────────────────────────────────┘        │
                           │                          │
                           ▼                          │
         ┌──────────────────────────────────┐        │
     #63 │        MASKING PROCESSING         │        │
         └──────────────────────────────────┘        │
                           │                          │
                           ▼                          │
         ┌──────────────────────────────────┐        │
     #64 │       DISPLAY PREVIEW IMAGE       │        │
         │    (RECEIVE EDITION OPERATION)    │        │
         └──────────────────────────────────┘        │
                           │                          │
                           ▼                          │
                       ╱       ╲                    Y │
              #65  ◄  EDITION OPERATION HAS  ────────┘
                    ╲  BEEN PERFORMED ?  ╱
                       ╲       ╱
                           │ N
                           ▼
         ┌──────────────────────────────────┐
     #66 │        OUTPUT PROCESSING          │
         └──────────────────────────────────┘
                           │
                           ▼
                    ┌─────────────┐
                    │     END     │
                    └─────────────┘
```

FIG.15

3

31

NB

+NEW GENERATION

RB,B1

BASIC
SETTING

RB,B2

CUSTOM 1

RB,B2

CUSTOM 2

FIG.16

3

32

☐ NAME

☐ ADDRESS

☑ HEIGHT

DB

DECISION

## INTERNATIONAL SEARCH REPORT

| International application No. |
| --- |
| **PCT/JP2024/033694** |

### A. CLASSIFICATION OF SUBJECT MATTER

*H04N 1/387*(2006.01)i; *H04N 1/00*(2006.01)i
FI: H04N1/387 200; H04N1/00 C

According to International Patent Classification (IPC) or to both national classification and IPC

### B. FIELDS SEARCHED

Minimum documentation searched (classification system followed by classification symbols)

H04N1/387; H04N1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-97056 A (CANON ELECTRONICS INC.) 20 June 2019 (2019-06-20) paragraphs [0055]-[0059], [0065]-[0068], [0079]-[0080], [0107]-[0108], [0117], fig. 1-8, 11, 15, 20 | 1-4 |
| A | | 6-14 |
| X | JP 2010-45427 A (FUJI XEROX CO., LTD.) 25 February 2010 (2010-02-25) paragraphs [0013], [0015], [0017], [0026]-[0033], fig. 1-4 | 1, 5 |
| A | | 6-14 |
| A | JP 2012-95263 A (KYOCERA MITA CORP.) 17 May 2012 (2012-05-17) entire text, all drawings | 1-14 |

☐ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **19 November 2024** | **03 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/033694**

| Patent document cited in search report | | | Publication date (day/month/year) | Patent family member(s) | Publication date (day/month/year) |
|---|---|---|---|---|---|
| JP | 2019-97056 | A | 20 June 2019 | (Family: none) | |
| JP | 2010-45427 | A | 25 February 2010 | (Family: none) | |
| JP | 2012-95263 | A | 17 May 2012 | (Family: none) | |

Form PCT/ISA/210 (patent family annex) (July 2022)

**EP 4 787 829 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021197682 A